# EUROPEAN PATENT APPLICATION

(11) **EP 2 394 840 A2**
(43) Date of publication of application: **14.12.2011**
(21) Application number: 11167511.2
(22) Date of filing: 25.05.2011
(51) Int. Cl.: B60L 11/18

(54) **Non-contact power feeding device**

(30) Priority: 10.06.2010 JP 2010132986
(71) Applicant: Showa Aircraft Industry Co., Ltd., Tokyo 196-0014 (JP)
(72) Inventor: Yamamoto, Kitao, Akishima-shi Tokyo 196-0014 (JP); Sato, Takeshi, Akishima-shi Tokyo 196-0014 (JP); Abe, Keisuke, Akishima-shi Tokyo 196-0014 (JP); Mochizuki, Masashi, Akishima-shi Tokyo 196-0014 (JP); Okiyoneda, Yasuyuki, Akishima-shi Tokyo 196-0014 (JP)
(74) Representative: Piésold, Alexander James

(57) **Abstract**

In a non-contact power feeding device 22 of the present invention, power is fed through an air gap G with no contact from a power transmission coil 3 of a power feeding side circuit 19 to a power receiving coil 8 of a power receiving side circuit 20, which are located to face each other, based on a mutual induction effect of electromagnetic induction. In such a non-contact power feeding device 22, a resonant coil 16 of a repeating circuit 15 is disposed on the power transmission coil 3 side and/or the power receiving coil 8 side. The resonant coil 16 is wound in parallel on the same plane as the power transmission coil 3 and/or the power receiving coil 8. The resonant coil 16, the power transmission coil 3 and the power receiving coil 8 are respectively composed of a single insulated conducting wire or a number of insulated conducting wires.

## Description

### BACKGROUND OF THE INVENTION

### 1. Field of the Invention

The present invention relates to a non-contact power feeding device, and more particularly to a non-contact power feeding device adapted to feed power, with no contact, to a power receiving side which is mounted on a vehicle and the like from a power feeding side which is fixedly disposed on the ground side.

### 2. Technological background

A non-contact power feeding device adapted to feed power from outside to, for example, a battery of an electric vehicle without any mechanical contact such as a cable has been developed based on the remand and this device is in practical use.

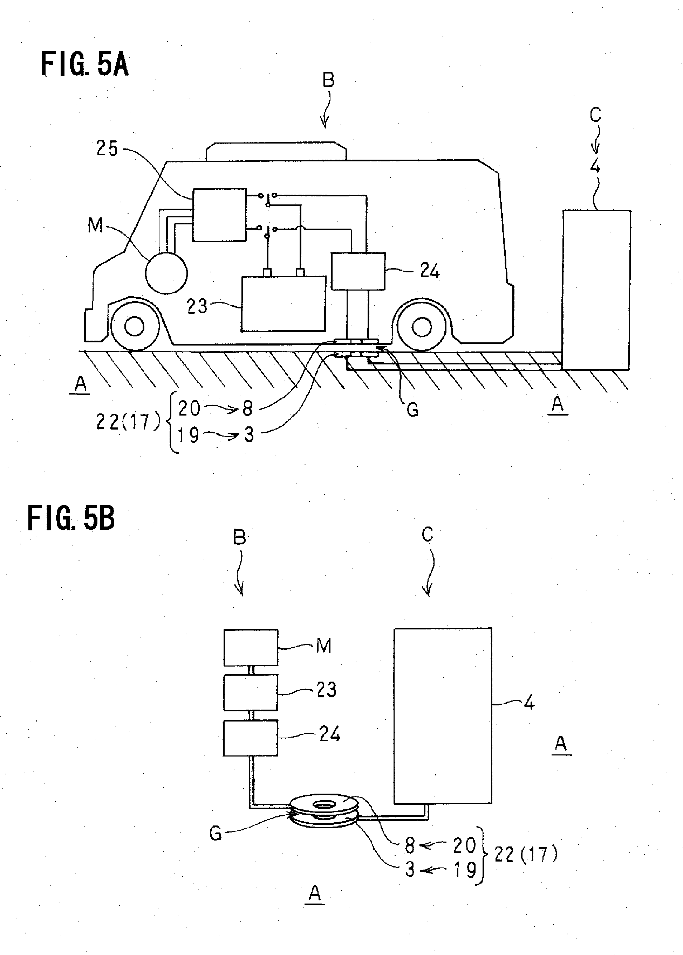

In such a non-contact power feeding device, power is fed through an air gap of about tens of millimeters to hundreds of millimeters to a power receiving coil mounted on an electric vehicle or other vehicle from a power transmission coil which is fixedly disposed on the ground side, based on a mutual induction effect of electromagnetic induction (refer to Fig. 5 described below).

### 3. Description of the Prior Art

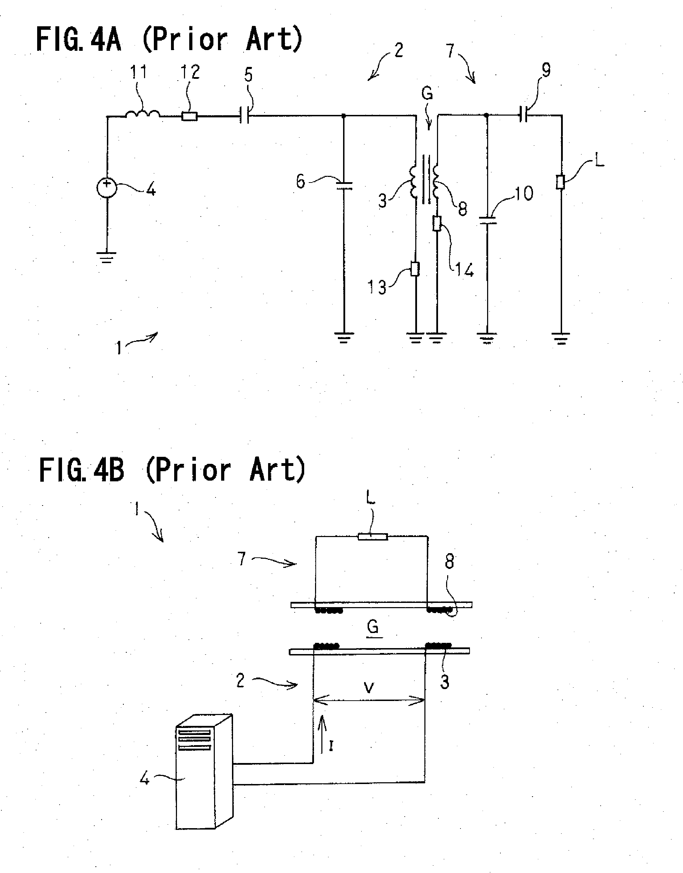

Fig. 4 shows a conventional non-contact power feeding device 1, wherein Fig. 4A is a circuit diagram and Fig. 4B is an explanatory circuit diagram.

As shown in Figs. 4A and 4B, a power feeding side circuit 2 of the conventional non-contact power feeding device 1 of this type is provided in such a manner that a power transmission coil 3 is connected to a power source 4 of a high frequency alternating current, and a capacitor 5 for series resonance with the power transmission coil 3 and/or a capacitor 6 for parallel resonance with the power transmission coil 3 are disposed. Referring to a power receiving side circuit 7 of the non-contact power feeding device 1, a power receiving coil 8 is connected to a load L and a battery, and a capacitor 9 for series resonance with the power receiving coil 8 and/or a capacitor 10 for parallel resonance with the power receiving coil 8 are disposed.

In the case of power feeding, the power transmission coil 3 is caused to face the power receiving coil 8 through an air gap G. A magnetic flux is then formed at the power transmission coil 3 to which an exciting current is applied, to generate an induced electromotive force at the power receiving coil 8, thereby feeding power to the power receiving side circuit 7 from the power feeding side circuit 2.

In this case, the power transmission coil 3 and the capacitors 5, 6, and the power receiving coil 8 and the capacitors 9, 10, respectively form a resonant circuit. As a result, an exciting reactive power is fed to a magnetic path of the air gap G by the resonance to expand the air gap G and to increase the power supply quantity. Reference numeral 11 in Fig. 4A is a choke coil, 12. is a circuit resistance, and 13 and 14 are coil resistances.

### 4. Prior art documents

### (Patent Documents)

Examples of such a non-contact power feeding device 1 are disclosed in the following Patent Documents 1 and 2.
[Patent Document 1] Japanese Unexamined Patent Publication No. H07 (1995)-170681; and
[Patent Document 2] Japanese Unexamined Patent Publication No. 2008-087733

### 5. Problems to be solved by the Invention

With reference to such a conventional non-contact power feeding device 1 as shown in Figs. 4A and 4B, there is an increasing need for further expansion of the air gap G, that is, an increasing need for effectively feeding a predetermined power through larger air gap G.

In other words, there is an increasing need for further increasing the electromagnetic coupling between the power feeding side circuit 2, that is, the power transmission coil 3, and the power receiving side circuit 7, that is, the power receiving coil 8 to improve a coupling coefficient showing the degree of electromagnetic coupling, thereby improving the power feeding efficiency.

### (Prior application)

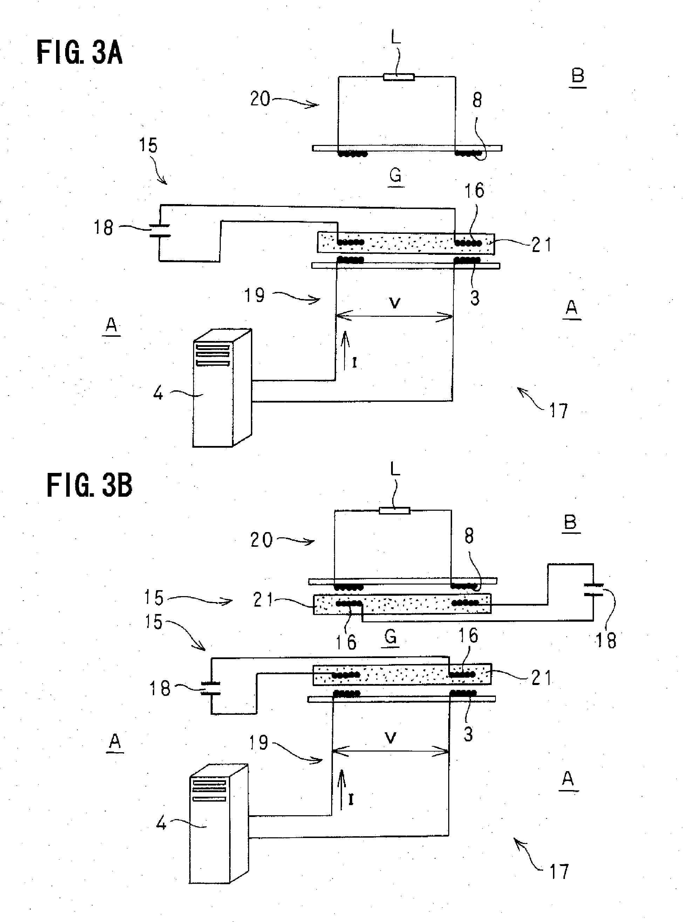

Under these circumstances, an inventor and an applicant of the present invention have carried out research and development regarding such a theme and have filed a prior Japanese Patent Application (No. 2009-019086; Date of application: January 30, 2009). A non-contact power feeding device 17 according to this prior application is characterized in that, as shown in Figs. 3A and 3B, a resonant coil 16 of a repeating circuit 15 is disposed on the power transmission coil 3 side and/or the power receiving coil 8 side.

In other words, the non-contact power feeding device 17 is provided with the independent repeating circuit 15 as a resonance circuit. The repeating circuit 15 is provided in such a manner that the resonant coil 16 adapted to resonate with a capacitor 18 is disposed in a magnetic path of the air gap G.

In this manner, by feeding the exciting reactive power to the magnetic path from the resonant coil 16, the entire exciting reactive power can be increased without making the power feeding side circuit 19 and the power receiving side circuit 20 high-voltage. As a result, it is possible to improve the coupling coefficient, expand the air gap G and feed a large amount of power. Reference numeral 21 of Figs. 3A and 3B is a molded resin.

### (Problems)

The non-contact power feeding device 17 of the prior application as shown in Figs. 3A and 3B has an extremely beneficial effect described above, but it has been pointed out that there is a problem in the coil thickness.

In the non-contact power feeding device 17, a comparatively thin coil of a flat structure is adopted for the power transmission coil 3, the power receiving coil 8, the resonant coil 16 and the like. However, even in such a flat structure, it has been pointed out that there is a problem that the power transmission coil 3 and the resonant coil 16, and the power receiving coil 8 and the resonant coil 16 are disposed to overlap each other in the magnetic path and as a result, the coil is made thick in total.

In other words, on the side of ground A, for example, a road surface, of the non-contact power feeding device 17, the resonant coil 16 is disposed to overlap in the magnetic path of the power transmission coil 3. As a result, a space for encasing both coils 3, 16 in concrete and holding them is made large and gains weight as well. Accordingly, it has been pointed out that it is not easy to dispose the non-contact power feeding device 17 on the ground A side.

Further, on the side of a vehicle B, for example, its floor surface, of the non-contact power feeding device 17, the resonant coil 16 is disposed to overlap in the magnetic path of the power receiving coil 8 and as a result, a space for installing both coils 8, 16 under a floor surface and the like is made bulky and gains weight as well. Thus, it has been pointed out that it is not easy to dispose the non-contact power feeding device 17 on the side of vehicle B and the like.

### SUMMARY OF THE INVENTION

### 1. Present Invention

A non-contact power feeding device of the present invention was developed to solve the problems of the non-contact power feeding device 17 of the prior application.

It is therefore an object of the present invention to provide an improved non-contact power feeding device in which, first, a coil can be made thin, second, this (reduction of the coil thickness) can be realized with a high coupling coefficient, a large air gap and a large amount of power supply, and, third, these can be readily realized with a simple structure and economic advantage.

### 2. Means for solving the problems

A technical means of the present invention is as follows as described in claims.

### (Aspect 1)

A non-contact power feeding device is provided, in which power is fed through an air gap with no contact from a power transmission coil of a power feeding side circuit .to a power receiving coil of a power receiving side circuit, which are located to face each other, based on a mutual induction effect of electromagnetic induction. In such a non-contact power feeding device, a resonant coil of a repeating circuit is disposed on the power transmission coil side and/or the power receiving coil side, and the resonant coil is wound in parallel on the same plane as the power transmission coil and/or the power receiving coil.

Further, as described in the following aspects 2 through 8, the non-contact power feeding device according to the present invention can be modified by adding technically limited elements.

### (Aspect 2)

In the non-contact power feeding device according to aspect 1, the repeating circuit is independent of the power feeding side circuit and the power receiving side circuit, and the resonant coil is provided to resonate with a capacitor disposed in the repeating circuit to feed the exciting reactive power to a magnetic path.

### (Aspect 3)

In the non-contact power feeding device according to aspect 1 or 2, the resonant coil and the power transmission coil are provided in such a manner that each insulated coil conducting wire is spirally wound more than once in a concentric pattern while maintaining the parallel positional relationship on the same plane whereby each insulated coil conducting wire is mutually disposed in parallel, and the resonant coil and the power transmission coil are formed in a flat structure as a whole.

### (Aspect 4)

In the non-contact power feeding device according to aspect 1, 2 or 3, the power feeding side circuit such as the power transmission coil is fixedly disposed on the ground side, while the power receiving side circuit such as the power receiving coil is mounted on a vehicle or other movable body.

### (Aspect 5)

In the non-contact power feeding device according to aspect 1, 2, 3 or 4, the resonant coil, the power transmission coil and the power receiving coil are respectively composed of a single insulated coil conducting wire or a number of insulated coil conducting wires.

### (Aspect 6)

In the non-contact power feeding device according to aspect 1 or 2, the resonant coil and the power receiving coil are provided in such a manner that each insulated coil conducting wire is spirally wound more than once in a concentric pattern while maintaining the parallel positional relationship on the same plane whereby each insulated coil conducting wire is mutually disposed in parallel, and the resonant coil and the power receiving coil are formed in a flat structure as a whole.

### (Aspect 7)

In the non-contact power feeding device according to aspect 6, the power feeding side circuit such as the power transmission coil is fixedly disposed on the ground side, while the power receiving side circuit such as the power receiving coil is mounted on a vehicle or other movable body.

### (Aspect 8)

In the non-contact power feeding device according to aspect 6 or 7, the resonant coil, the power transmission coil and the power receiving coil are respectively composed of a single insulated coil conducting wire or a number of insulated coil conducting wires.

### 3. Operation etc.

Operation and the like of the present invention will now be described in the following items (1) through (10).
(1) In the non-contact power feeding device of the present invention, a power receiving coil of a power receiving side circuit is located to face a power transmission coil of a power feeding side circuit through an air gap to effect power feeding.
(2) In the case of power feeding, the power transmission coil is energized to form a magnetic flux and as a result, a magnetic path of the magnetic flux is formed between the power transmission coil and the power receiving coil.
(3) In this manner, the power transmission coil and the power receiving coil are electromagnetically coupled to cause the power receiving coil to generate induced electromotive force. Power is fed by such a mutual induction effect of magnetic induction.
(4) In this non-contact power feeding device, a resonant coil .of a repeating circuit is disposed on the power transmission coil side and/or the power receiving coil side.
(5) The exciting reactive power is fed to the magnetic path from the resonant coil and thus, the magnetic flux necessary to feed a large amount of power over a large air gap can be formed without making the power feeding side circuit and the power receiving side circuit high-voltage.
(6) In this manner, the non-contact power feeding device of the present invention makes possible strengthening of the electromagnetic coupling, improvement of the coupling coefficient, expansion of the air gap and feeding of a large amount of power.
(7) In the non-contact power feeding device of the present invention, the above-described items (4) through (6) can be realized by the structure whereby the resonant coil is wound in parallel on the same plane as the power transmission coil and/or the power receiving coil.
(8) The coil can be made thin because the resonant coil and the power transmission coil, and/or the resonant coil and the power receiving coil are disposed in parallel without overlapping each other.
(9) The structure for making the coil thin can be readily realized.
(10) The non-contact power feeding device of the present invention has the following first, second and third effects.

### 4. Effects of the Invention

### (First effect)

First, a coil can be made thin. In other words, the non-contact power feeding device of the present invention is provided in such a manner that a resonant coil is wound in parallel on the same plane as a power transmission coil and/or a power receiving coil.

Since the resonant coil is disposed on the same plane as the power transmission coil on the ground side, for example, on the side of a road surface, the coil can be made thin in total as compared to the above-described non-contact power feeding device of the prior application in which both coils are disposed to overlap in the magnetic path. Accordingly, a space for totally encasing both coils in concrete and the like and holding them can be made thin and the weight can also be reduced accordingly. Thus, disposition of the non-contact power feeding device on the ground side can be readily realized.

Further, since the resonant coil is disposed on the same plane as the power receiving coil on the side of a vehicle and the like, for example, on the floor surface side of the vehicle, the coil can be made thin in total as compared to the above-described non-contact power feeding device of the prior application in which both coils are disposed to overlap in the magnetic path. In this manner, a space for installing the non-contact power feeding device under the floor surface and the like can be made small and the weight can also be reduced accordingly. Thus, disposition of the non-contact power feeding device of the present invention on vehicle side and the like can be readily realized.

### (Second effect)

Second, this (reduction of the coil thickness) can be realized with a high coupling coefficient, a large air gap and a large amount of power supply.

The non-contact power feeding device according to the present invention is provided in such a manner that the resonant coil is disposed with the power transmission coil and/or the power receiving coil. As in the above-described non-contact power feeding device of the prior application, the electromagnetic coupling between the power transmission coil of the power feeding side circuit and the power receiving coil of the power receiving side circuit is further strengthened. As a result, a higher coupling coefficient is obtained to provide an excellent power feeding efficiency.

With this arrangement, it is possible to make the air gap large without losing feeding electric power. In this non-contact power feeding device of the present invention, it is therefore possible to feed a large amount of power over a larger gap as compared to the conventional non-contact power feeding device of this type described above.

### (Third effect)

Third, these can be readily realized with a simple structure and economic advantage.

In the non-contact power feeding device of the present invention, the above-described first and second effects can be readily realized with a simple structure whereby the resonant coil is wound in parallel on the same plane as the power transmission coil and/or the power receiving coil.

In other words, in the non-contact power feeding device of the present invention, the resonant coil and the power transmission coil and/or the resonant coil and the power receiving coil are united (integrated) without being overlapped as a separate body in the magnetic path. Thus, as compared to the above-described non-contact power feeding device of prior application, the non-contact power feeding device of the present invention is excellent in cost in view of the fact that molded resin, other associated members and parts are reduced and production is simplified.

Especially regarding the vehicle .side and the like, a structure of the power receiving side circuit is not only simplified, but also a predetermined coupling coefficient can be obtained without a resonant capacitor. In other words, in the non-contact power feeding device of the present invention, cost on the vehicle side and the like can be reduced as compared to the conventional example of this type. In this manner, it has a great advantage that cost reduction can be realized on the vehicle side and the like which requires more parts than the ground side.

The present invention has prominent effects in that all the problems of the conventional example of this kind can be solved with the first, second and third effects.

### BRIEF DESCRIPTION OF THE DRAWINGS

The above and other objects, features and advantages of the present invention will become more apparent from the following description when taken in conjunction with the accompanying drawings.
Fig. 1 is an explanatory front view of part of a non-contact power feeding device according to the present invention;
Fig. 2 is provided to explain an embodiment for practicing the present invention, wherein Fig. 2A is a circuit diagram and Fig. 2B is a graph of a coupling coefficient;
Fig. 3 is provided to explain a non-contact power feeding device of a prior application, wherein Fig. 3A is an explanatory circuit diagram of one embodiment and Fig. 3B is an explanatory circuit diagram of another embodiment;
Fig. 4 is provided to explain a conventional non-contact power feeding device, wherein Fig. 4A is a circuit diagram and Fig. 4B is an explanatory circuit diagram; and
Fig. 5 is provided to generally explain the non-contact power feeding device, wherein Fig. 5A is an explanatory side view and Fig. 5B is a block diagram.

### DETAILED DESCRIPTION OF THE PREFERRED EMBODIMENTS

A preferred embodiment of the present invention will now be fully described hereunder, by way of example only.

### (Non-contact power feeding device 22)

First, a non-contact power feeding device 22 of the present invention (the non-contact power feeding device 17 of prior application) is generally described with reference to Figs. 5A and 5B.

The non-contact power feeding device 22 (17) is provided in such a manner that electric power is fed, through (over) an air gap G with no contact, from a power transmission coil 3 of a power feeding side circuit 19 to a power receiving coil 8 of a power receiving side circuit 20, which are closely located to face each other, based on a mutual induction effect of the electromagnetic induction. The power feeding side circuit 19 is fixedly disposed on the side of ground A, while the power receiving side circuit 20 is mounted on a movable body such as a vehicle B side.

Such a non-contact power feeding device 22 (17) will be further described. First, the power feeding side circuit 19 on the primary side, that is, the track side, is fixedly disposed on a ground surface, a road surface, a floor surface or other side of ground A at a power feeding stand C or in other power feeding area.

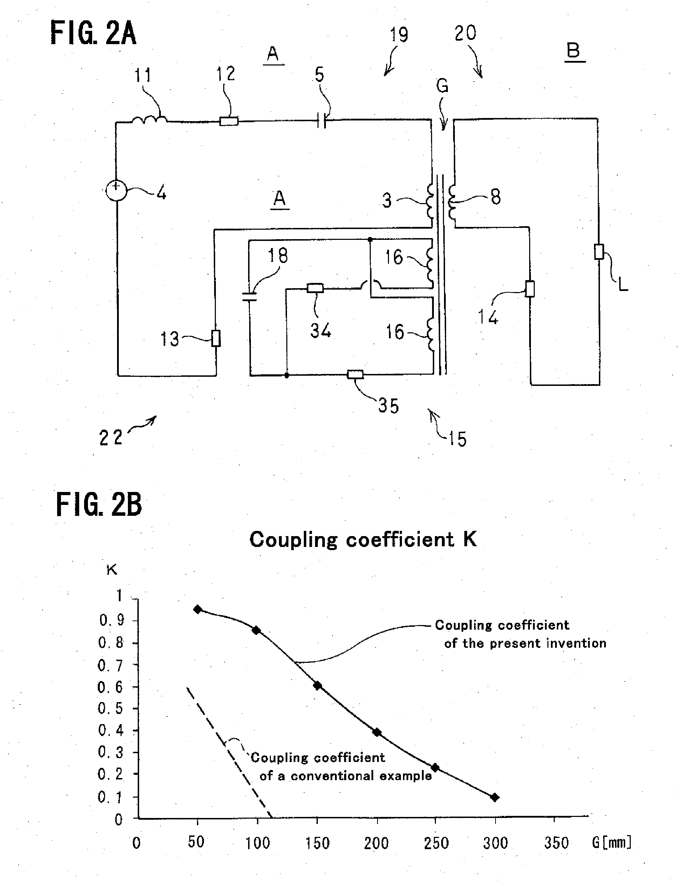

On the contrary, the power receiving side circuit 20 on the secondary side, that is, the pickup side is mounted on the vehicle B such as an electric vehicle or an electric train, or other movable body. The power receiving side circuit 20 is not only available for driving, but also for non-driving and as shown in Figs. 5A and 5B, it is usually connected to a car-mounted battery 23. However, as shown in Figs. 2A and 4A, the power receiving side circuit 20 can also be connected direct to various types of loads L.

In the case of power feeding operation, the power transmission coil 3 of the power feeding side circuit 19 and the power receiving coil 8 of the power receiving side circuit 20 are closely located to face each other with no contact through an air gap G which is a small space of, for example, about 50mm to i.50mm.

As shown in Figs. 5A and 5B, power feeding is typically effected by a stopped power feeding method whereby the power receiving coil 8 is stopped over the power transmission coil 3. In the case of the stopped power feeding method, the power transmission coil 3 and the power receiving coil 8 are provided in a vertically symmetric structure. However, unlike the example as shown in Figs. 5A and 5B, it is also possible to adopt a mobile power feeding method whereby the power receiving coil 8 runs at a low speed over the power transmission coil 3.

The power transmission coil 3 of the power feeding side circuit 2 is connected to a power source 4 in which a high frequency inverter is used. The power receiving coil 8 of the power receiving side circuit 20 can be connected to a battery 23 in the example as shown in Figs. 5A and 5B, wherein a running motor M is driven by the battery 23 charged by a power feeding operation. Reference numeral 24 of Figs. 5A and 5B is a converter for converting an alternating current to a direct current and 25 is an inverter for converting the direct current to the alternating current.

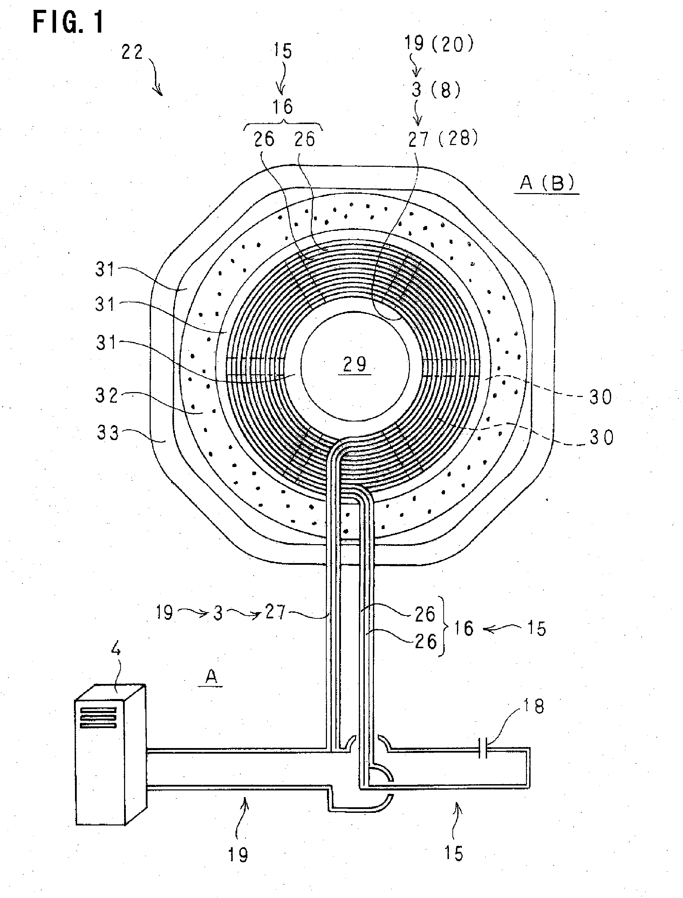

The power transmission coil 3 and the power receiving coil 8 are ' respectively composed of a substantially flat structure whereby an insulated coil conducting wire is wound more than once (a number of times). In other words, the power transmission coil 3 and the power receiving coil 8 are respectively formed in a thin flat structure of a circular, that is, substantially flange shape as a whole in which each insulated coil conducting wire is spirally wound more than once in a circular or rectangular shape while maintaining the parallel positional relationship in which, for example, a number of insulated conducting wires are disposed in parallel on the same plane (refer to Fig. 1 described later).

Next, a mutual induction effect of electromagnetic induction will be described. It is publicly known and used in practice that, in the case of power feeding between the power transmission coil 3 and the power receiving coil 8 which are located to face each other, a magnetic flux is formed in the power transmission coil 3 to generate induced electromotive force in the power receiving coil 8, thereby feeding electric power to the power receiving coil 8 from the power transmission coil 3.

In other words, by applying a high frequency alternating current of, for example, about 10 kHz to 100 kHz to the power transmission coil 3 of the power feeding side circuit 19 from the power source 4 as an exciting current, a magnetic field is generated around the coil conducting wire of the power transmission coil 3 to form a magnetic flux in the direction perpendicular to the coil surface. The magnetic flux formed in this way goes through the power receiving coil 8 of the power receiving side circuit 20 to generate the induced electromotive force, thereby forming the magnetic field, wherein the electric power is fed and received using the magnetic field formed.

In the non-contact power feeding device 22 (17), based on such a mutual induction effect of electromagnetic induction, the power transmission coil 3 of the power feeding side circuit 19 and the power receiving coil 8 of the power receiving side circuit 20 are electromagnetically coupled through the air gap G where a magnetic path of a magnetic flux is formed. As a result, power of several kW or more, for example, tens of kW to hundreds of kW can be fed.

The non-contact power feeding device 22 is as generally described above.

### (Non-contact power feeding device 17 of Figs. 3A and 3B)

A non-contact power feeding device 17 of the above-described prior application which becomes the premise of the present invention will be described below.

Unlike a general example as shown in Figs. 5A and 5B -and a conventional example as shown in Figs. 4A and 4B, the non-contact power feeding device 17 is provided in such a manner that a resonant coil 16 of a repeating circuit 15 is disposed on the power transmission coil 3 side and/or the power receiving coil 8 side (refer to Figs. 3A and 3B).

The repeating circuit 15 is a circuit which is independent of the power feeding side circuit 19 and the power receiving side circuit 20 and is a (resonant) circuit adapted to resonate in a resonant frequency matching an operating frequency of the power source 4. The repeating circuit 15 is provided in such a manner that the resonant coil 16 adapted to resonate with a capacitor 18 is the disposed in a magnetic path of the air gap G between the power transmission coil 3 and the power receiving coil 8.

The power transmission coil 3 and the resonant coil 16, and the power receiving coil 8 and the resonant coil 16 are respectively formed in a flat structure (refer to the above description for the flat structure). The power transmission coil 3 and/or the power receiving coil 8 have a positional relationship in which the resonant coil 16 is disposed to overlap in the magnetic path.

As just described, the non-contact power feeding device 17 is provided with the resonant coil 16. The resonant coil 16 feeds the exciting reactive power (i.e., the product of the exciting current and the counter-electromotive force generated in the magnetic flux) to the magnetic path of the magnetic flux between the power transmission coil 3 and the power receiving coil 8. The non-contact power feeding device 17 makes it possible to increase the exciting reactive power without making the power feeding side circuit 19 and the power receiving side circuit 20 large-current and/or high-voltage (Only the repeating circuit 15 is made large-current and/or high-voltage)..

In other words, by increasing the exciting reactive power input to the power transmission coil 3 and the power receiving coil 8, the non-contact power feeding device 17 makes it possible to generate the magnetic flux necessary to feed a large amount of power over the large air gap G in the magnetic path. Based on this, improvement of the coupling coefficient, expansion of the air gap G, feeding of a large amount of power, and the like can be achieved.

Referring to the example as shown in Fig. 3A. the repeating circuit 15 provided with such a resonant coil 16 is disposed only on the power transmission coil 3 side, that is, on the ground A side, of the power feeding side circuit 19.

Unlike the example as shown in Fig. 3A, it can also be considered that the repeating circuit 15 provided with the resonant coil 16 is disposed only on the power receiving coil 8 side of the power receiving side circuit 20, that is, only on each vehicle B side.

Further, as shown in Fig. 3B, it can also be considered that the repeating circuit 15 provided with the resonant coil 16 is disposed on both the power transmission coil 3 side of the power feeding side circuit 19 and the power receiving coil 8 side of the power receiving side circuit 20. In this case, the improvement of the coupling coefficient, expansion of the air gap G, feeding of a large amount of power, and the like can be further promoted.

The non-contact power feeding device 17 of Fig. 3 serving as the premise of the present invention is as described above.

### (Outline of a preferred embodiment of the present invention

A non-contact power feeding device 22 of an embodiment of the present invention will now be described with reference to Figs. 1 and 2A. First, an outline of the embodiment will be described.

In the non-contact power feeding device 22, a resonant coil 16 of a repeating circuit 15 is disposed on a power transmission coil 3 side of a power feeding side circuit 19 and/or a power receiving coil 8 side of a power receiving side circuit 20.

The resonant coil 16 is wound in parallel on the same plane as the power transmission coil 3 and the power receiving coil 8. The resonant coil 16, the power transmission coil 3 and the power receiving coil 8 are respectively composed of a single insulated coil conducting wire or a number of insulated coil conducting wires (26, 27 and 28).

The outline of the preferred embodiment of the present invention is as described above.

### (Detailed description of the preferred embodiment)

The non-contact power feeding device 22 will now be described in detail with reference to Figs. 1 and 2A.

Since the structures, functions, etc of the resonant coil 16, the power transmission coil 3 and the power receiving coil 8 of the non-contact power feeding device 22 except the positional relationship between them conform to those of the non-contact power feeding device 17 as shown in Figs. 3A and 3B serving as the premise of the present invention described above, these are given the same reference numerals and their descriptions are omitted.

Further, the structures of the non-contact power feeding device 22 conforming to those as shown in Figs. 4A, 4B, 5A and 5B are also given the same reference numerals and their descriptions are omitted.

The positional relationship of the resonant coil 16 and the like is as follows. In the example as shown in Fig. 1, the resonant coil 16 and the power transmission coil 3 are wound in parallel on the same plane.

One unit of insulated coil conducting wire 26 constituting the resonant coil 16 and one unit of insulated coil conducting wire 27 constituting the power transmission coil 3 are spirally wound a number of times in a concentric manner to be circular or rectangular shape while maintaining a parallel positional relationship in which the insulated coil conducting wires are internally and externally disposed in parallel on the same plane. In this manner, the resonant coil 16 and the power transmission coil 3 are integrally and flatly gathered to provide a thin flat structure as a whole. In other words, the resonant coil 16 and the power transmission coil 3 are provided with a central open space 29 in the center to provide a circular shape, that is, a substantially flange shape.

A ferromagnetic body such as a ferrite core 30 is used as a magnetic core for the power transmission coil 3. The ferromagnetic body is formed in a flat circular shape, that is, a substantially flange shape and is disposed in the same concentric pattern as the power transmission coil 3.

Reference numerals put in parentheses at the top of Fig. 1 shows an example in which the resonant coil 16 and the power receiving coil 8 are wound in parallel on the same plane.

In other words, in this example, one unit of insulated coil conducting wire 26 constituting the resonant coil 16 and one unit of insulated coil conducting wire 28 constituting the power receiving coil 8 are spirally wound more than once (a number of times) in a concentric pattern while maintaining the parallel positional relationship in which the insulated coil conducting coils are disposed in parallel internally and externally on the same plane. In this manner, the resonant coil 16 and the power receiving coil 8 are respectively formed in a flat structure as a whole. Their detailed structures conform to those of the resonant coil 16 and the power transmission coil 3 described above.

The number of the insulated coil conducting wires 26 constituting the resonant coil 16, the number of the insulated coil conducting wires 27 constituting the power transmission coil 3, and the number of insulated coil conducting wires 28 constituting the power receiving coil 8 can be singular or plural.

In other words, the resonant coil 16, the power transmission coil 3 and the power receiving coil 8 are respectively composed of a single insulated coil conducting wire or a number of insulated coil conducting wires (26, 27 and 28). In the examples as shown in Figs. 1 and 2A, the resonant coil 16 is provided so that two insulated coil conducting wires 26 are formed as one unit, while the power transmission coil 3 (the power receiving coil 8) is provided so that one insulated coil conducting wire 27 (the insulated coil conducting wire 28) is formed as one unit. Thus, in the examples as shown in Figs. 1 and 2A, three insulated coil conducting wires are wound in parallel.

A winding method is as follows. First, for the resonant coil 16 and the power transmission coil 3 (or the power receiving coil 8), a method is considered whereby both insulated coil conducting wires 26 and 27 (or 28) are aligned together to rewind from inside to outside, in order, from the central section.

For the resonant coil 16 and the power transmission coil (or the power receiving coil 8), another method is also available whereby both insulated coil conducting wires 26 and 27 (or 28) are first separately rewound with a groove space to mutually fit both wires into the groove space. Further, a still further method is also available whereby both wires are first separately rewound for inside or outside (without the groove space described above) with the winding diameter small or large to fit the inside wire into the central open space for the outside wire.

Reference numeral 31 of Fig. 1 is a molded resin, 32 is a foamed material, and 33 is a base plate. Reference numerals 34 and 35 of Fig. 2A are coil resistance.

Details of the preferred embodiment of the present invention are as described above.

### (Operation etc.)

The non-contact power feeding device 22 of the present invention is constructed as described above. Operation etc. of the present invention will now be described in the following items (1) through (9).
(1) In the non-contact power feeding device 22, a power receiving coil 8 of a power receiving side circuit 20 on the side of a movable body such as a vehicle B is located to face a power transmission coil 3 of a power feeding side circuit 19 on the ground A side through an air gap G to feed power. Power feeding is typically conducted by a stopped power feeding method (refer to Figs. 5A and 5B). '
(2) In the case of power feeding, the power transmission coil 3 first receives a high frequency alternating current from a power source 4 as an exciting current. In this manner, a magnetic flux is formed on the power transmission coil 3, wherein a magnetic path of the magnetic flux is formed in the air gap G between the power transmission coil 3 and the power receiving coil 8.
(3) In this manner, the power transmission coil 3 and the power receiving coil 8 are electromagnetically coupled, wherein the magnetic flux goes through the power receiving coil 8 to generate the induced electromotive force on the power receiving coil 8. By such a mutual induction effect of electromagnetic induction, power is fed from the power feeding side circuit 19 to the power receiving side circuit 20 (refer to Figs. 5A and 5B).
(4) A resonant repeating method is adopted in the non-contact power feeding device 22 of the present invention. In other words, a resonant coil 16 of a repeating circuit 15 provided with a resonant capacitor 18 is disposed on the power transmission coil 3 side of the power feeding side circuit 19 and/or the power receiving coil 8 side of the power receiving side circuit 20 (refer to Figs. 2A and 3).
(5) The resonant coil 16 resonates with the capacitor 18 in the resonant frequency to feed the exciting reactive power to the magnetic path between the power transmission coil 3 and the power receiving coil 8 and as a result, the increase of the exciting reactive power can be realized. It is therefore possible to generate the magnetic flux necessary to feed a large amount of power in the magnetic path under (over) the large air gap G.
(6) Based on this, in the non-contact power feeding device 22, strengthening of the electromagnetic coupling, improvement of the coupling coefficient, expansion of the air gap G and feeding of a large amount of power become possible as in the non-contact power feeding device 17 as shown in Figs. 3A and 3B, (refer also to an embodiment of Fig. 2 described below).
(7) In the non-contact power feeding device 22, these items (4) through (6) can be realized by adopting a structure whereby the resonant coil 16 of the independent repeating circuit 15 is wound in parallel on the same plane as the power transmission coil 3 of the power feeding side circuit 19 and/or the power receiving coil 8 of the power receiving side circuit 20.
(8) Since this non-contact power feeding device 22 is provided so that the resonant coil 16, the power receiving coil 8 and/or the power receiving coil 8 are disposed on the same plane, the coil can be made thin in total as compared to the non-contact power feeding device 17 of the prior application as shown in Figs. 3A and 3B.
   Since the resonant coil 16, the power transmission coil and/or the power receiving coil 8 are disposed on the same plane without overlapping each other on the ground A side and the vehicle B side, the coils can be made thin in total.
(9) Further, in this non-contact power feeding device 22, the above-described items (7) and (8) can be realized by a simple structure whereby the resonant coil 16, the power transmission coil and/or the power receiving coil 8 are wound in parallel on the same plane.

As compared to the non-contact power feeding device 17 of the prior application as shown in Figs. 3A and 3B in which the resonant coil 16, the power transmission coil 3 and/or the power receiving coil 8 are formed as a separate body, the structure of the non-contact power feeding device 22 can be simplified. Even in comparison to the conventional non-contact power feeding device 1 as shown in Figs. 4A and 4B, a predetermined coupling coefficient can be obtained even though the resonant capacitors 9, 10 are not provided for each power receiving side circuit 7 such as the vehicle B as in the non-contact power feeding device 1. Thus, the structure of the non-contact power feeding device 22 can be simplified even from this point of view.

Operation and the like are as described above.

Fig. 2B is a graph showing the data of each coupling coefficient of an embodiment of the non-contact power feeding device 22 of the present invention as shown in Fig. 2A and the conventional non-contact power feeding device 1 as shown in Figs. 4A and 4B.

Even the comparison of the experimental data by the graph supports that the non-contact power feeding device 22 is better than the conventional non-contact power feeding device 1 in the coupling coefficient which shows the degree of electromagnetic coupling between the magnetic circuit coils.

This experimental data was obtained by computing the coupling coefficient K for each spacing size based on the actual measurement value while changing the spacing size of the air gaps G of the non-contact power feeding device 22 and the non-contact power feeding device 1.

According to the experimental data obtained, in the conventional non-contact power feeding device 1, the coupling coefficient K is 0.6 in the case where the air gap G is 40 mm, while the coupling coefficient K is 0.1 in the case where the air gap G is 100 mm.

On the contrary, in the non-contact power feeding device 22 of the present invention, the coupling coefficient K is 0.95 in the case where the air gap G is 50 mm, while the coupling coefficient K is 0.85 in the case where the air gap G is 100 mm. Even in the case where the air gap G is 200 mm, the coupling coefficient K is 0.38 and further, the coupling coefficient K is 0.08 even in the case where the air gap G is 300 mm.

In the conventional non-contact power feeding device 1, the coupling coefficient K is 0.2'l in the case where the air gap G is 80 mm and as a result, supply power of 6 kW was obtained on the experiment. On the contrary, in the non-contact power feeding device 22 of the present invention, the coupling coefficient K of 0.6 was obtained in the case where the air gap G is 150 mm and it is possible to obtain the same supply power of 6 kW as in the conventional non-contact power feeding device 1.

In other words, both devices 1, 22 showed the same output power of 6 kW, but in the case of the non-contact power feeding device 22 of the present invention, it is to be noted that the output power of 6 kW has been attained under much larger air gap G and with a small power source 4 output. In this manner, the present invention made it possible to obtain high coupling coefficient K and to feed a large amount of power under a large air gap G.

The preferred embodiment is as described above.

### Explanation of reference numerals

1: Non-contact power feeding device (Conventional example); 2: Power feeding side circuit (Conventional example); 3: Power transmission coil; 4: Power source; 5: Capacitor; 6: Capacitor; 7: Power receiving side circuit (Conventional example); 8: Power receiving coil; 9: Capacitor; 10: Capacitor; 11: Choke coil; 12: Circuit resistance; 13: Coil resistance; 14: Coil resistance; 15: Repeating circuit; 16: Resonant coil; 17: Non-contact power feeding device (Prior application); 18: Capacitor; 19: Power feeding side circuit (Present invention; Prior application); 20: Power receiving side circuit (Present invention; Prior application); 21: Molded resin; 22: Non-contact power feeding device (Present invention); 23: Battery; 24: Converter; 25: Inverter; 26: Coil conducting wire; 27: Coil conducting wire; 28: Coil conducting wire; 29: Central open space; 30: Ferrite core; 31: Molded resin; 32: Foamed material; 33: Base plate; 34: Coil resistance; 35: Coil resistance; A: Ground; B: Vehicle; C: Power feeding stand; G: Air gap; L: Load; M: Motor '

## Claims

1. A non-contact power feeding device(22) adapted to feed power through an air gap(G) with no contact from a power transmission coil(3) of a power feeding side circuit(19) to a power receiving coil(8) of a power receiving side circuit(20), which are located to face each other, based on a mutual induction effect of electromagnetic induction, **characterized in that** a resonant coil(16) of a repeating circuit(15) is disposed on the power transmission coil(3) side and/or the power receiving coil(8) side and the resonant coil(16) is wound in parallel on the same plane as the power transmission coil(3) and/or the power receiving coil(8).

2. The non-contact power feeding device(22) according to claim 1, wherein the repeating circuit(15) is independent of the power feeding side circuit(19) and the power receiving side circuit(20) and the resonant coil(16) is provided to resonate with a capacitor(18) disposed in the repeating circuit(15) to feed the exciting reactive power to a magnetic path.

3. The non-contact power feeding device(22) according to claim 1 or 2, wherein the resonant coil(16) and the power transmission coil(3) are provided in such a manner that each insulated coil conducting wire(26,27) is spirally wound more than once in a concentric pattern while maintaining the parallel positional relationship on the same plane whereby each insulated coil conducting wire(26,27) is mutually disposed in parallel, and the resonant coil(16) and the power transmission coil(3) are formed in a flat structure as a whole.

4. The non-contact power feeding device(22) according to claim 1, 2 or 3, wherein the power feeding side circuit(19) such as the power transmission coil(3) is fixedly disposed on the ground(A) side, while the power receiving side circuit(20) such as the power receiving coil(8) is mounted on a vehicle(B) or other movable body. '

5. The non-contact power feeding device(22) according to any preceding claim, wherein the resonant coil(16), the power transmission coil(3) and the power receiving coil(8) are respectively composed of a single insulated coil conducting wire(26,27,and28) or a plurality of insulated coil conducting wires(26,27,and28).

6. The non-contact power feeding device(22) according to claim 1 or 2, wherein the resonant coil(16) and the power receiving coil(8) are provided in such a manner that each insulated coil conducting wire(26,28) is spirally wound more than once in a concentric pattern while maintaining the parallel positional relationship on the same plane whereby each insulated coil conducting wire(26,28) is mutually disposed in parallel and the resonant coil(16) and the power receiving coil(8) are formed in a flat structure as a whole.

7. The non-contact power feeding device(22) according to claim 6, wherein the power feeding side circuit(19) such as the power transmission coil(3) is fixedly disposed on the ground(A) side, while the power receiving side circuit(20) such as the power receiving coil(8) is mounted on a vehicle(B) or other movable body.

8. The non-contact power feeding device(22) according to claim 6 or 7, wherein the resonant coil(16), the power transmission coil(3) and the power deceiving coil(8) are respectively composed of a single coil conducting wire(26,27,and28) or a number of insulated coil conducting wires(26,27,and28).
